# EUROPÄISCHE PATENTSCHRIFT

(11) **EP 2 755 869 B1**
(45) Veröffentlichungstag und Bekanntmachung des Hinweises auf die Patenterteilung: **12.07.2017**
(21) Anmeldenummer: 12759684.9
(22) Anmeldetag: 12.09.2012
(51) Int. Cl.: B60R 16/023, G01C 21/16, G01C 25/00, G01S 19/49

(54) **AUSRICHTUNGSMODELL FÜR EIN SENSORSYSTEM**
ORIENTATION MODEL FOR A SENSOR SYSTEM
MODÈLE D'ORIENTATION POUR UN SYSTÈME CAPTEUR

(30) Priorität: 12.09.2011 DE 102011082534; 12.09.2011 DE 102011082535; 12.09.2011 DE 102011082539; 12.09.2011 DE 102011082548; 12.09.2011 DE 102011082549; 12.09.2011 DE 102011082551; 12.09.2011 DE 102011082552; 21.11.2011 DE 102011086710; 02.05.2012 DE 102012207297
(43) Veröffentlichungstag der Anmeldung: 23.07.2014
(73) Patentinhaber: Continental Teves AG & Co. OHG, 60488 Frankfurt (DE)
(72) Erfinder: Steinhardt, Nico, 60327 Frankfurt (DE)
(74) Vertreter: Wagner, Philipp
(86) Internationale Anmeldenummer: PCT/EP2012/067876
(87) Internationale Veröffentlichungsnummer: WO 2013/037853

(56) Entgegenhaltungen:
- WO-A2-2005/062984
- WO-A2-2007/143806
- DE-A1-102006 029 148
- DE-A1-102010 063 984
- US-A1- 2010 106 356
- SCHLAILE C ET AL: "Using natural features for vision based navigation of an indoor-VTOL MAV", AEROSPACE SCIENCE AND TECHNOLOGY, ELSEVIER MASSON, FR, Bd. 13, Nr. 7, 1. Oktober 2009 (2009-10-01), Seiten 349-357, XP026737585, ISSN: 1270-9638, DOI: 10.1016/J.AST.2009.09.001 [gefunden am 2009-09-10]

## Beschreibung

Die Erfindung betrifft ein Sensorsystem gemäß Oberbegriff von Anspruch 1 sowie dessen Verwendung in Kraftfahrzeugen, insbesondere in Automobilen.

Offenlegungsschrift DE 10 2010 063 984 A1 beschreibt ein Sensorsystem, umfassend mehrere Sensorelemente und eine Signalverarbeitungseinrichtung, wobei die Signalverarbeitungseinrichtung so ausgelegt ist, dass die Ausgangssignale der Sensorelemente gemeinsam ausgewertet werden.

Die WO 2005/062984 A2 beschreibt ein System zur Schätzung einer Straßenkrümmung, wobei mittels eines Kalman Filters der Zustand eines Fahrzeugs aus Geschwindigkeit und Drehrate des Fahrzeugs geschätzt wird. Darauf basierend erfolgt eine Schätzung von Straßenkrümmungsparametern mittels Ausgleichsrechnung der Fahrzeugtrajektorie oder mittels eines weiteren Kalman Filters.

Der Erfindung liegt die Aufgabe zu Grunde, ein Sensorsystem vorzuschlagen, welches eine relativ hohe Genauigkeit bezüglich seiner Signalverarbeitung bietet bzw. ermöglicht.

Diese Aufgabe wird gelöst durch das Sensorsystem gemäß Anspruch 1.

Die Erfindung beschreibt ein Sensorsystem zur Anordnung in einem Fahrzeug, umfassend mehrere Sensorelemente, die so ausgebildet sind, dass sie zumindest teilweise unterschiedliche primäre Messgrößen erfassen und zumindest teilweise unterschiedliche Messprinzipien nutzen, wobei das Sensorsystem zusätzlich ein Satellitennavigationssystem aufweist und dass das Sensorsystem des Weiteren eine Signalverarbeitungseinrichtung umfasst, wobei die Signalverarbeitungseinrichtung so ausgebildet ist, dass sie die Sensorsignale der Sensorelemente sowie die Ausgangssignale des Satellitennavigationssystems zumindest teilweise direkt oder indirekt gemeinsam auswertet, wobei die Signalverarbeitungseinrichtung ein Sensorfusionsmodul umfasst, das ein Fusionsfilter aufweist, welches im Zuge der gemeinsamen Auswertung zumindest der Sensorsignale und/oder daraus abgeleiteter Signale der Sensorelemente einen definierten Fusionsdatensatz bereitstellt, wobei dieser Fusionsdatensatz jeweils Daten zu definierten physikalischen Größen aufweist, wobei der Fusionsdatensatz zu wenigstens einer physikalischen Größe einen Wert dieser physikalischen Größe und eine Information über deren Datenqualität umfasst, wobei die Signalverarbeitungseinrichtung eine erste Gruppe von Daten physikalischer Größen berechnet und/oder verwendet, deren Werte sich auf ein Fahrzeugkoordinatensystem beziehen und wobei die Signalverarbeitungseinrichtung zusätzlich eine zweite Gruppe von Daten physikalischer Größen berechnet und/oder verwendet, deren Werte sich auf ein Weltkoordinatensystem beziehen, wobei dieses Weltkoordinatensystem insbesondere zumindest zur Beschreibung der Ausrichtung und/oder von dynamischen Größen des Fahrzeugs auf der Welt geeignet ist, wobei das Sensorsystem eine Ausrichtungsmodelleinheit aufweist, mit welcher der Ausrichtungswinkel zwischen dem Fahrzeugkoordinatensystem und dem Weltkoordinatensystem berechnet wird, und wobei die Ausrichtungsmodelleinheit so ausgebildet ist, dass sie zusätzlich zu dem Ausrichtungswinkel noch eine Information über die Datenqualität dieser Größe berechnet und bereitstellt, insbesondere die Varianz des Ausrichtungswinkels. Das erfindungsgemäße Sensorsystem zeichnet sich dadurch aus, dass das Fusionsfilter so ausgebildet ist, dass der Fusionsdatensatz als Wert der wenigstens einen physikalischen Größe einen relativen Wert umfasst, insbesondere einen Offsetwert und/oder Änderungswert und/oder Korrekturwert und/oder Fehlerwert, wobei der Ausrichtungswinkel zwischen dem Fahrzeugkoordinatensystem und dem Weltkoordinatensystem in der Ausrichtungsmodelleinheit berechnet wird zumindest auf Basis folgender Größen:
die Geschwindigkeit des Fahrzeugs bezüglich des Fahrzeugkoordinatensystems,
die Geschwindigkeit des Fahrzeugs bezüglich des Weltkoordinatensystems,
wobei die Ausrichtungsmodelleinheit den Ausrichtungswinkel zwischen dem Fahrzeugkoordinatensystem und dem Weltkoordinatensystem sowie die Information über die Datenqualität dieser Größe dem Fusionsfilter bereitstellt und der Fusionsfilter diesen Ausrichtungswinkel bei seinen Berechnungen verwendet.

Das Sensorsystem ist zweckmäßigerweise in einem Fahrzeug, insbesondere einem Kraftfahrzeug, besonders bevorzugt einem Automobil, angeordnet.

Das Fahrzeugkoordinatensystem und/oder das Weltkoordinatensystem sind vorzugsweise als drei-achsige kartesische Koordinatensysteme ausgebildet. Dabei ist das Fahrzeugkoordinatensystem insbesondere so definiert, dass die erste Achse die Längsachse des Fahrzeugs ist, die zweite Achse die Querachse des Fahrzeugs und die dritte Achse die Hochachse des Fahrzeugs.

Es ist besonders bevorzugt, dass die relativen Werte der jeweiligen physikalischen Größen des Fusionsdatensatzes Korrekturwerte sind und die Information über die Datenqualität der Wertephysikalischen Größen Varianzen sind.

Es ist zweckmäßig, dass das Sensorsystem eine Inertialsensoranordnung aufweist, umfassend wenigstens ein Beschleunigungssensorelement und zumindest ein Drehratensensorelement, und dass das Sensorfusionsmodul eine Strapdown-Algorithmus-Einheit umfasst, in welcher ein Strapdown-Algorithmus durchgeführt wird, mit dem wenigstens die Sensorsignale der Inertialsensoranordnung zu, insbesondere korrigierten, Navigationsdaten und/oder Fahrdynamikdaten verarbeitet werden, bezogen auf das Fahrzeug, in welchem das Sensorsystem angeordnet ist.

Es ist bevorzugt, dass der Ausrichtungswinkel zwischen dem Fahrzeugkoordinatensystem und dem Weltkoordinatensystem in der Ausrichtungsmodelleinheit berechnet wird zusätzlich zumindest auf Basis einer oder mehrerer der folgenden Größen: eine Ausrichtungsinformation des Fahrzeugs bezogen auf das Weltkoordinatensystem,
einige oder sämtliche der Korrekturwerte und/oder Varianzen des Fusionsfilters und/oder
die Beschleunigung des Fahrzeugs bezogen auf das Fahrzeugkoordinatensystem und/oder das Weltkoordinatensystem.

Es ist zweckmäßig, dass die Ausrichtungsmodelleinheit einige oder sämtliche der Ausgangsdaten und/oder Ausgangssignale der Strapdown-Algorithmus-Einheit zur Berechnung verwendet.

Besonders bevorzugt leitet der Fusionsfilter die Information über die Datenqualität dieser Größe, insbesondere die Varianz des Ausrichtungswinkels, an die Strapdown-Algorithmus-Einheit weiter.

Es ist zweckmäßig, dass die Ausrichtungsmodelleinheit so ausgebildet ist, dass sie zusätzlich zu dem Ausrichtungswinkel noch eine Information über die Datenqualität dieser Größe berechnet und bereitstellt, insbesondere die Varianz des Ausrichtungswinkels,
wobei der Ausrichtungswinkel der Strapdown-Algorithmus-Einheit bereitgestellt wird und/oder in dieser mit dem Ausgangswert der Ausrichtungsmodelleinheit überschrieben wird und dass die Information über die Datenqualität dieser Größe, insbesondere die Varianz des Ausrichtungswinkels, dem Fusionsfilter bereitgestellt wird und/oder in diesem mit dem Ausgangswert der Ausrichtungsmodelleinheit überschrieben wird.

Das Sensorsystem umfasst vorzugsweise ein Satellitennavigationssystem, welches so ausgebildet ist, dass es die Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe erfasst und dem Fusionsfilter bereitstellt und der Fusionsfilter diese Größen bei seinen Berechnungen verwendet.

Es ist bevorzugt, dass die Ausrichtungsmodelleinheit so ausgebildet ist, dass sie bei ihren Berechnungen wenigstens eine oder mehrere oder sämtliche der folgenden Modellannahmen berücksichtigt:
die Gesamtgeschwindigkeit des Fahrzeugs bezüglich zumindest seiner Längs- und/oder Querachse ist größer als Null,
die durchschnittliche Geschwindigkeit des Fahrzeugs in Richtung/ entlang seiner Hochachse ist gleich Null,
es tritt kein Schräglauf der Reifen auf und/oder das Fahrzeug folgt im Wesentlichen ohne Abweichungen seinen Radlenkwinkeln.

Es ist zweckmäßig, dass der Ausrichtungswinkel zwischen dem Fahrzeugkoordinatensystem und dem Weltkoordinatensystem in der Ausrichtungsmodelleinheit berechnet wird zusätzlich zumindest auf Basis einer oder mehrerer der folgenden Größen: die Raddrehzahlen von Raddrehzahlsensorelementen des Fahrzeugs sowie den Lenkwinkel oder die berechnetet Radwinkel, wobei mit den Raddrehzahlen und dem Lenkwinkel oder den Radwinkeln über Differenzbildung die Drehrate des Fahrzeugs um dessen Hochachse bestimmt wird und/oder
die Drehrate des Fahrzeugs um dessen Hochachse bezogen auf das Fahrzeugkoordinatensystem, bereitgestellt von der Strapdown-Algorithmus-Einheit.

Es ist bevorzugt, dass der Ausrichtungswinkel zwischen dem Fahrzeugkoordinatensystem und dem Weltkoordinatensystem in der Ausrichtungsmodelleinheit berechnet wird zusätzlich zumindest auf Basis einer oder mehrerer der folgenden Größen: eine Ausrichtungsinformation des Fahrzeugs bezogen auf das Weltkoordinatensystem,
einige oder sämtliche der Korrekturwerte und/oder Varianzen des Fusionsfilters,
eine Positionsinformation des Fahrzeugs bezogen auf das Fahrzeugkoordinatensystem und/oder das Weltkoordinatensystem und/oder
die Beschleunigung des Fahrzeugs bezogen auf das Fahrzeugkoordinatensystem und/oder das Weltkoordinatensystem.

Die Ausrichtungsmodelleinheit ist vorzugsweise so ausgebildet, dass wenigstens eine der folgenden Randbedingungen für die Modellgültigkeit bei jeder Ausführung geprüft werden und bei Nichterfüllung die Ergebnisse verworfen werden:
- Die Winkelinkremente müssen ausreichend klein sein bzw. begrenzt werden, um mit kleinem Fehler linearisierbar zu sein (Eulerwinkel)
- Beschleunigungen und kinematische Verzwängungen der Achsen durch große Lenkeinschläge müssen ausreichend klein sein, damit der Momentanpol der Bewegung konstant ist.

Die Ausrichtungsmodelleinheit ist zweckmäßigerweise so ausgebildet, dass sie wenigstens eine der folgenden Operationen und/oder Schritte durchführt:
- Miteinbeziehung von Raddrehzahlmessungen erlaubt über Differenzbildung die Bestimmung der Soll-Drehrate um die Hochachse, welche zusammen mit der Ist-Drehrate aus der Strapdown-Algorithmus-Einheit eine zusätzliche Messgröße liefert.
- Direkte Korrektur der Verdrehung bzw. des Ausrichtungswinkels in der Strapdown-Algorithmus-Einheit zwischen fahrzeugfesten und Navigationskoordinaten bzw. zwischen Fahrzeugkoordinatensystem und dem Weltkoordinatensystem bei großen Abweichungen unter Verwendung zumindest einer oder alle der Eulerschen' Gleichungen.

Das Fusionsfilter ist bevorzugt als Kalmanfilter ausgebildet, alternativ vorzugsweise als Partikelfilter, oder alternativ als Informationsfilter oder alternativ als "Unscented" Kalmanfilter.

Es ist bevorzugt, dass das Fusionsfilter so ausgebildet ist, dass der Fusionsdatensatz als Wert der wenigstens einen physikalischen Größe einen relativen Wert umfasst, insbesondere einen Offsetwert und/oder Änderungswert und/oder Korrekturwert und/oder Fehlerwert.

Es ist zweckmäßig, dass der die relativen Werte der jeweiligen physikalischen Größen des Fusionsdatensatzes Korrekturwerte sind, denen jeweils eine Streuungsinformation bzw. Streuung bzw. Streuungsmaß, insbesondere eine Varianz, als Information über deren Datenqualität zugeordnet sind.

Es ist bevorzugt, dass das Fusionsfilter so ausgebildet ist, dass der Wert wenigstens einer physikalischen Größe des Fusionsdatensatzes auf direkter oder indirekter Basis von Sensorsignalen mehrerer Sensorelemente berechnet wird, wobei diese Sensorelemente diese wenigstens eine physikalische Größe redundant in direkter oder indirekter Weise erfassen. Diese redundante Erfassung ist besonders bevorzugt direkte bzw. parallele Redundanz verwirklicht und/oder als analytische Redundanz verwirklicht, aus rechnerisch abgeleiteten bzw. hergeleiteten Größen/Werten und/oder Modellannahmen.

Das Fusionsfilter ist bevorzugt als Kalmanfilter ausgebildet, das iterativ wenigstens Prädiktionsschritte sowie Korrekturschritte durchführt und zumindest teilweise den Fusionsdatensatz bereitstellt. Insbesondere ist das Fusionsfilter als Error State Space Extended Sequential Kalman Filter ausgebildet, also als Kalman Filter, das besonders bevorzugt eine Linearisierung umfasst und in welchem Fehlerzustandsinformationen berechnet und/oder geschätzt werden und/oder welches sequentiell arbeitet und dabei die in dem jeweiligen Funktionsschritt der Sequenz verfügbaren Eingangsdaten verwendet/berücksichtigt.

Es ist zweckmäßig, dass das Sensorsystem eine Inertialsensoranordnung aufweist, umfassend wenigstens ein Beschleunigungssensorelement und zumindest ein Drehratensensorelement, und dass das Sensorsystem eine Strapdown-Algorithmus-Einheit umfasst, in welcher ein Strapdown-Algorithmus durchgeführt wird, mit dem wenigstens die Sensorsignale der Inertialsensoranordnung zu, insbesondere korrigierten, Navigationsdaten und/oder Fahrdynamikdaten verarbeitet werden, bezogen auf das Fahrzeug, in welchem das Sensorsystem angeordnet ist.

Es ist besonders bevorzugt, dass die Strapdown-Algorithmus-Einheit ihre berechneten Navigationsdaten und/oder Fahrdynamikdaten dem Fusionsfilter direkt oder indirekt bereitstellt.

Das Sensorsystem weist vorzugsweise eine Inertialsensoranordnung auf, welche so ausgebildet ist, dass sie zumindest die Beschleunigung entlang einer zweiten definierten Achse, insbesondere der Querachse des Fahrzeugs, und wenigstens die Drehrate um eine dritte definierte Achse, insbesondere der Hochsachse des Fahrzeugs, erfassen kann,
wobei die erste und die dritte definierte Achse ein Erzeugendensystem bilden, und dabei insbesondere senkrecht zueinander ausgerichtet sind,
wobei das Sensorsystem außerdem mindestens ein Raddrehzahlsensorelement, insbesondere zumindest oder genau vier Raddrehzahlsensorelemente aufweist, welche die Raddrehzahl eines Rades oder die Raddrehzahlen jeweils eines der Räder des Fahrzeugs erfassen und insbesondere zusätzlich die Drehrichtung des zugeordneten Rades des Fahrzeugs erfassen, in dem das Sensorsystem angeordnet ist,
wobei das Sensorsystem zusätzlich wenigstens ein Lenkwinkelsensorelement umfasst, welches den Lenkwinkel des Fahrzeugs erfasst und
wobei das Sensorsystem darüber hinaus ein Satellitennavigationssystem umfasst, welches insbesondere so ausgebildet ist, dass es die Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe erfasst und/oder bereitstellt.

Besonders bevorzugt ist die Inertialsensoranordnung so ausgebildet, dass sie zumindest die Beschleunigungen entlang einer ersten, einer zweiten und einer dritten definierte Achse und wenigstens die Drehraten um diese erste, um diese zweite und um diese dritte definierte Achse erfassen kann, wobei diese erste, zweite und dritte definierte Achse ein Erzeugendensystem bilden, und dabei insbesondere jeweils senkrecht zueinander ausgerichtet sind.

Es ist bevorzugt, dass die Inertialsensoranordnung ihre Sensorsignale der Strapdown-Algorithmus-Einheit bereitstellt und die Strapdown-Algorithmus-Einheit so ausgebildet ist, dass sie zumindest
aus den Sensorsignalen der Inertialsensoranordnung sowie insbesondere wenigstens einer Fehlerzustandsinformation und/oder Varianz und/oder Information über die Datenqualität, die einem Sensorsignal oder einer physikalischen Größe zugeordnet ist und von dem Fusionsfilter bereitgestellt wird,
als Messgrößen und/oder Navigationsdaten und/oder Fahrdynamikdaten
mindestens korrigierte Beschleunigungen entlang der ersten, der zweiten und der dritten definierten Achse,
wenigstens korrigierte Drehraten um diese drei definierten Achsen,
wenigstens eine Geschwindigkeit bezüglich dieser drei definierten Achsen
sowie zumindest eine Positionsgröße
berechnet und/oder bereitstellt.

Es ist zweckmäßig, dass das Sensorsystem so ausgebildet ist, dass jeweils zumindest ein Sensorsignal und/oder eine physikalische Größe als direkte oder abgeleitete Größe der Inertialsensoranordnung und/oder der Strapdown-Algorithmus-Einheit,
der Raddrehzahlsensorelemente und des Lenkwinkelsensorelements, insbesondere indirekt über eine Fahrzeugmodelleinheit,
sowie des Satellitennavigationssystems, dabei insbesondere Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe,
dem Fusionsfilter bereitstellt und vom Fusionsfilter bei dessen Berechnungen berücksichtigt werden.

Es ist besonders bevorzugt, dass die Fahrzeugmodelleinheit so ausgebildet ist, dass aus den Sensorsignalen der Raddrehzahlsensorelemente und des Lenkwinkelsensorelements die Geschwindigkeit entlang der ersten definierten Achse, die Geschwindigkeit entlang der zweiten definierten Achse sowie die Drehrate um die dritte definierte Achse berechnet werden.

Es ist ganz besonders bevorzugt, dass die Fahrzeugmodelleinheit so ausgebildet ist, dass sie zur Berechnung ein Verfahren der kleinsten Fehlerquadrate zur Lösung eines überbestimmten Gleichungssystems, insbesondere als Least-Squared-Error-Verfahren bekannt, verwendet.

Es ist zweckmäßig, dass die Fahrzeugmodelleinheit so ausgebildet ist, dass sie bei ihrer Berechnung mindestens folgende physikalische Größen und/oder Parameter berücksichtigt
a) den Lenkwinkel jedes Rades, insbesondere durch den Lenkwinkelsensor für die beiden Vorderräder erfasst, wobei die Modellannahme getroffen wird, dass der Lenkwinkel der Hinterräder gleich Null ist oder dass der Lenkwinkel der Hinterräder zusätzlich erfasst wird,
b) die Raddrehzahl oder eine davon abhängige Größe jeden Rades,
c) die Drehrichtung jeden Rades,
d) der dynamische Halbmesser und/oder Raddurchmesser jeden Rades und
e) die Spurbreite jeder Achse des Fahrzeugs und/oder den Radstand zwischen den Achsen des Fahrzeugs.

Die Signalverarbeitungseinrichtung ist vorzugsweise so ausgebildet, dass das Fusionsfilter den Fusionsdatensatz zu definierten Zeitpunkten berechnet und/oder bereitstellt und/oder ausgibt.

Das Fusionsfilter ist bevorzugt so ausgebildet, dass es den Fusionsdatensatz unabhängig von den Abtastraten und/oder Sensorsignalausgabezeitpunkten der Sensorelemente, insbesondere der Raddrehzahlsensorelemente und des Lenkwinkelsensorelements, und unabhängig von zeitlichen Signal- oder Messgrößen-/ oder Informationsausgabezeitpunkten des Satellitennavigationssystems, berechnet und/oder bereitstellt und/oder ausgibt.

Es ist zweckmäßig, dass die Signalverarbeitungseinrichtung so ausgebildet ist, dass im Zuge eines Funktionsschritts des Fusionsfilters stets, insbesondere asynchron, die neuesten, dem Fusionsfilter verfügbaren Informationen und/oder Signale und/oder Daten
der Sensorelemente, insbesondere der Raddrehzahlsensorelemente und des Lenkwinkelsensorelements, direkt oder indirekt, insbesondere mittels der Fahrzeugmodelleinheit und des Satellitennavigationssystems direkt oder indirekt, sequenziell aktualisiert und/oder in das Fusionsfilter aufgenommen werden und bei der Berechnung des zugeordneten Funktionsschritts des Fusionsfilters berücksichtigt werden.

Es ist bevorzugt, dass das Sensorsystem eine Stillstandserkennungseinheit aufweist, welche so ausgebildet ist, dass sie einen Stillstand des Fahrzeugs erkennen kann und im Fall eines erkannten Stillstands des Fahrzeugs zumindest dem Fusionsfilter Informationen aus einem Stillstandsmodell bereitstellt, dabei insbesondere die Informationen, dass die Drehraten um alle drei Achsen den Wert Null aufweisen und wenigstens eine Positionsänderungsgröße ebenfalls den Wert Null aufweist sowie insbesondere die Geschwindigkeiten entlang aller drei Achsen den Wert Null aufweisen.

Es ist bevorzugt, dass die Signalverarbeitungseinrichtung eine erste Gruppe von Daten physikalischer Größen berechnet und/oder verwendet, deren Werte sich auf ein Fahrzeugkoordinatensystem beziehen und wobei die Signalverarbeitungseinrichtung zusätzlich eine zweite Gruppe von Daten physikalischer Größen berechnet und/oder verwendet, deren Werte sich auf ein Weltkoordinatensystem beziehen, wobei dieses Weltkoordinatensystem insbesondere zumindest zur Beschreibung der Ausrichtung und/oder von dynamischen Größen des Fahrzeugs auf der Welt geeignet ist, wobei
das Sensorsystem eine Ausrichtungsmodelleinheit aufweist, mit welcher der Ausrichtungswinkel zwischen dem Fahrzeugkoordinatensystem und dem Weltkoordinatensystem berechnet wird, wobei
der Ausrichtungswinkel zwischen dem Fahrzeugkoordinatensystem und dem Weltkoordinatensystem in der Ausrichtungsmodelleinheit berechnet wird zumindest auf Basis folgender Größen: die Geschwindigkeit bezüglich des Fahrzeugkoordinatensystems,
die Geschwindigkeit bezüglich des Weltkoordinatensystems und insbesondere der Lenkwinkel.

Es ist zweckmäßig, dass die folgenden Begriffe synonym verwendet werden, also technisch umgesetzt dasselbe bedeuten: Offsetwert, Änderungswert, Korrekturwert und Fehlerwert.

Unter einer Fehlerzustandsinformation wird bevorzugt eine Fehlerinformation und/oder eine Fehlerkorrekturinformation und/oder eine Streuungsinformation und/oder eine Varianzinformation und/oder eine Genauigkeitsinformation verstanden.

Unter dem Begriff Varianz wird vorzugsweise der Begriff Streuung verstanden, wobei insbesondere im Fall eines allgemeinen Fusionsfilters, dieses jeweils eine Streuung bzw. einen Streuungswert jedem Wert einer physikalischen Größe des Fusionsfilters zuordnet, und im Fall eines Kalmanfilters als Fusionsfilters, jeweils eine Varianz jedem Wert einer physikalischen Größe des Fusionsfilters zuordnet wird/ist.

Es ist zweckmäßig, dass die erste, zweite und dritte definite Achse bezogen auf ein Koordinatensystem des Fahrzeugs, in dem das Sensorsystem implementiert ist, wie folgt definiert sind:
die erste definierte Achse entspricht der Längsachse des Fahrzeugs,
die zweite definierte Achse entspricht der Querachse des Fahrzeugs und
die dritte definierte Achse entspricht der Hochachse des Fahrzeugs. Diese drei Achsen bilden insbesondere ein kartesisches Koordinatensystem.

Es ist bevorzugt, dass das Fusionsfilter so ausgebildet ist, dass seine Daten, insbesondere die physikalischen Größen bzw. die Daten der physikalischen Größen des Fusionsdatensatzes, in stets konstant große Blöcke aufgeteilt sind oder werden, welche in beliebiger Reihenfolge im Fusionsfilter iterativ verarbeitet werden, das Fusionsfilter führt also bezüglich seiner Eingangsdaten ein sequentielles Update durch. Dabei ist das Fusionsfilter besonders bevorzugt so ausgebildet, dass die Filtergleichungen angepasst werden, so dass das rechnerische Ergebnis des sequentiellen Updates in jeden Schritt des Fusionsfilters ein Update, also eine Datenaktualisierung, für sämtliche Messgrößen der Eingangsdaten des Fusionsfilters ist.

Das Sensorsystem ist zweckmäßigerweise in einem Fahrzeug, insbesondere einem Kraftfahrzeug, besonders bevorzugt einem Automobil, angeordnet.

Das Sensorsystem ist bevorzugt so ausgebildet, dass Daten des Satellitennavigationssystems, insbesondere Positionsdaten, eine Zeitstempelinformation zugeordnet wird, welche im Wesentlichen den Messzeitpunkt dieser Daten beschreibt. Die Zeitstempelinformation des jeweiligen Datums des Satellitennavigationssystems wird gemeinsam mit diesem jeweiligen Datum dem Fusionsfilter bereitgestellt und bei der internen Berechnung im Fusionsfilter berücksichtigt.

Bevorzugt wird außerdem den Daten weiterer oder sämtlicher Sensorelemente und/oder der Inertialsensoranordnung ebenfalls eine solche Zeitstempelinformation zugeordnet, die ebenfalls mit dem jeweiligen Datum dem Fusionsfilter bereitgestellt wird und bei der internen Berechnung im Fusionsfilter berücksichtigt wird. Zweckmäßigerweise wird bezüglich der Daten des Satellitennavigationssystems die jeweilige Zeitstempelinformation von dem Satellitennavigationssystem selbst erzeugt.

Es ist bevorzugt, dass bei den zusätzlichen Zeitstempelinformationen der weiteren Sensorelemente und/oder der Inertialsensoranordnung die jeweilige Zeitstempelinformation von der Signalverarbeitungseinrichtung erzeugt wird, insbesondere in Abhängigkeit der Zeitmessung des Satellitennavigationssystems.

Vorzugsweise umfasst ein Funktionsschritt des Fusionsfilters wenigstens einen Prädiktionsschritt sowie einen Korrekturschritt. Das Fusionsfilter ist dabei iterativ ausgebildet und führt iterativ, nacheinander Funktionsschritte aus. Insbesondere werden innerhalb jedes Funktionsschritts des Fusionsfilters Daten bzw. Werte bzw. Signale eingelesen, also Eingangsdaten berücksichtigt, also auch Daten bzw. Werte bzw. Signale ausgegeben, also als Ausgangs-/ Ausgabedaten bereitgestellt.

Das Fusionsfilter ist vorzugsweise so ausgebildet, dass das Fusionsfilter mehrere Aktualisierungsschritte innerhalb eines Funktionsschritts durchführt, wobei diese Aktualisierungsschritte sich auf das Laden bzw. Verwenden bzw. Aktualisieren von Eingangsdaten bzw. -signalen bezieht. Das Fusionsfilter geht insbesondere sequentiell sämtliche Eingangsgrößen bzw. Eingangssignale durch und prüft jeweils ob neue Informationen/ Daten vorliegen. Falls ja werden diese in das Filter übernommen bzw. die Informationen/ Daten im Filter aktualisiert, falls nein bleibt der aktuelle Wert erhalten und das Filter prüft den nächsten Eingang bzw. die nächste Eingangsgröße bzw. das nächste Eingangssignal.

Die Strapdown-Algorithmus-Einheit stellt vorzugsweise zumindest absolute Werte physikalischer Größen bereit, insbesondere absolute Werte für die Beschleunigung, die Drehrate, die Geschwindigkeit, dabei jeweils bezogen auf die drei Achsen den Fahrzeug- und/oder Weltkoordinatensystem, sowie eine Position und den Ausrichtungswinkel. Die Werte zu diesen Größen werden dabei besonders bevorzugt alle von der Strapdown-Algorithmus-Einheit als korrigierte Werte/ Größen bereitgestellt.

Es ist zweckmäßig, dass die Inertialsensoranordnung das Fusionsfilter taktet und/oder triggert, insbesondere wird jeder Fusionsschritt, der vom Fusionsfilter ausgeführt wird, von der Inertialsensoranordnung bzw. wenigstens einem Ausgangssignal bzw. Ausgangsdatum getriggert.

Es ist bevorzugt, dass die Strapdown-Algorithmus-Einheit so ausgebildet ist, dass sie einen Startvektor physikalischer Größen aufweist und/oder einen Startwert der Position, insbesondere bezüglich des Starts des Sensorsystems, besonders bevorzugt nach jedem Einschalten des Sensorsystems. Diesen Startvektor und/oder diese Startposition erhält die Strapdown-Algorithmus-Einheit besonders bevorzugt über das Fusionsfilter von dem Satellitennavigationssystem.

Es ist zweckmäßig, dass die Daten des Fusionsfilters, insbesondere dessen Fusionsdatensatz, einen virtuellen Sensor abbilden bzw. einem solchen entsprechen.

Unter dem Begriff Sensorelemente werden bevorzugt die Raddrehzahlsensorelemente, das wenigstens eine Lenkwinkelsensorelement, die Sensorelemente der Inertialsensoranordnung und insbesondere zusätzlich auch das Satellitennavigationssystem verstanden.

Es ist bevorzugt, wenn allgemein eine Größe und/oder Wert hinsichtlich der drei definierten Achsen angegeben wird, dass dies bezüglich des Fahrzeugkoordinatensystems und/oder des Weltkoordinatensystems gemeint ist.

Es ist zweckmäßig, dass der Fusionsdatensatz, der Werte der physikalischen Größen umfasst, einen relativen Wert, beispielhaft einen Korrekturwert, auch Offsetwert genannt, umfasst und insbesondere der Strapdown-Algorithmus-Einheit bereitstellt. Beispielgemäß ergibt sich dieser jeweilige Korrekturwert jeweils aus den kumulierten Fehlerwerten bzw. Änderungswerten, die vom Fusionsfilter bereitgestellt werden.

Die Erfindung bezieht sich außerdem auf die Verwendung des Sensorsystems in Fahrzeugen, insbesondere Kraftfahrzeugen, besonders bevorzugt in Automobilen.

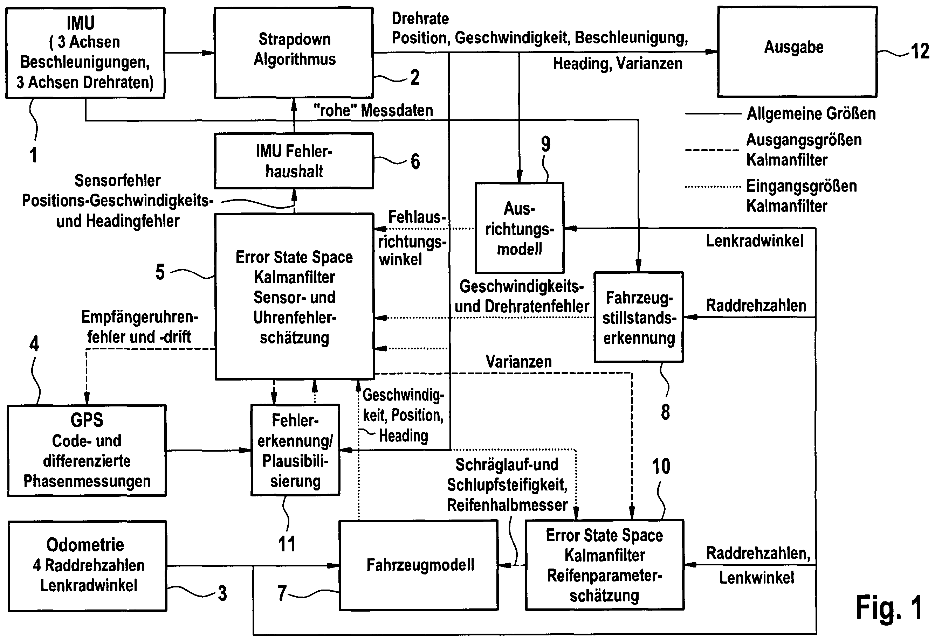

Weitere bevorzugte Ausführungsformen ergeben sich aus den Unteransprüchen und der nachfolgenden Beschreibung eines Ausführungsbeispiels an Hand von Fig. 1.

Fig. 1 zeigt in schematischer Darstellung ein Ausführungsbeispiel des Sensorsystems, das zur Anordnung und Verwendung in einem Fahrzeug vorgesehen ist. Dabei sind die Sensorelemente und das Satellitennavigationssystem sowie die wichtigsten Signalverarbeitungseinheiten der Signalverarbeitungseinrichtung als Funktionsblöcke veranschaulicht und deren Zusammenwirken untereinander.

Das Sensorsystem umfasst eine Inertialsensoranordnung 1, IMU, "inertial measurement unit", die so ausgebildet ist, dass sie zumindest die Beschleunigungen entlang einer ersten, einer zweiten und einer dritten definierte Achse und wenigstens die Drehraten um diese erste, um diese zweite und um die dritte definierte Achse erfassen kann, wobei die erste definierte Achse der Längsachse des Fahrzeugs entspricht, die zweite definierte Achse der Querachse des Fahrzeugs entspricht und die dritte definierte Achse der Hochachse des Fahrzeugs entspricht. Diese drei Achsen bilden ein kartesisches Koordinatensystem, das Fahrzeugkoordinatensystem.

Das Sensorsystem weist eine Strapdown-Algorithmus-Einheit 2 auf, in welcher ein Strapdown-Algorithmus durchgeführt wird, mit dem wenigstens die Sensorsignale der Inertialsensoranordnung 1 zu korrigierten, Navigationsdaten und/oder Fahrdynamikdaten verarbeitet werden. Diese Ausgangsdaten der Strapdown-Algorithmus-Einheit 2 umfassen die Daten folgender physikalischer Größen:
die Geschwindigkeit, die Beschleunigung sowie die Drehrate jeweils des Fahrzeugs, beispielhaft bezüglich der drei Achsen des Fahrzeugkoordinatensystems und beispielgemäß zusätzlich jeweils bezogen auf ein Weltkoordinatensystem, das zur Beschreibung der Ausrichtung und/oder von dynamischen Größen des Fahrzeugs auf der Welt geeignet ist. Außerdem umfassen die Ausgangsdaten der Strapdown-Algorithmus-Einheit 2 die Position bezüglich des Fahrzeugkoordinatensystems und die Ausrichtung hinsichtlich des Weltkoordinatensystems. Zusätzlich weisen die Ausgangsdaten der Strapdown-Algorithmus-Einheit die Varianzen als Information über die Datenqualität der obig genannten physikalischen Größen auf, zumindest einiger davon. Diese Varianzen werden beispielgemäß nicht in der Strapdown-Algorithmus-Einheit berechnet, sondern nur von dieser verwendet und weitergeleitet.

Die Ausgangsdaten der Strapdown-Algorithmus-Einheit sind beispielhaft außerdem die Ausgangsdaten bzw. -signale bzw. Ausgabedaten 12 des gesamten Sensorsystems.

Das Sensorsystem umfasst außerdem Raddrehzahlsensorelemente 3 für jedes Rad des Fahrzeugs, beispielgemäß vier, welche die Raddrehzahlen jeweils eines der Räder des Fahrzeugs erfassen und jeweils zusätzlich die Drehrichtung erfassen, und zusätzlich ein Lenkwinkelsensorelement 3, das den Lenkwinkel des Fahrzeugs erfasst. Die Raddrehzahlsensorelement und das Lenkwinkelsensorelement bilden eine Sensoranordnung 3 zur Erfassung der Odometrie.

Darüber hinaus weist das Sensorsystem ein Satellitennavigationssystem 4 auf, welches so ausgebildet ist, dass es die Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe erfasst und/oder bereitstellt. Zusätzlich stellt das Satellitennavigationssystem 4 beispielgemäß dem Fusionsfilter eine Startposition bzw. Startpositionsinformation bereit, zumindest zum Start oder Einschalten des Sensorsystems.

Die Signalverarbeitungseinrichtung des Sensorsystems umfasst außerdem ein Fusionsfilter 5. Das Fusionsfilter 5 stellt im Zuge der gemeinsamen Auswertung zumindest der Sensorsignale und/oder daraus abgeleiteter Signale der Sensorelemente 3, also der Odometrie, und der Ausgangssignale des Satellitennavigationssystems 4 und/oder daraus abgeleiteter Signale einen definierten Fusionsdatensatz 6 bereit. Dieser Fusionsdatensatz weist jeweils Daten zu definierten physikalischen Größen auf, wobei der Fusionsdatensatz 6 zu wenigstens einer physikalischen Größe einen Wert dieser physikalischen Größe und eine Information über deren Datenqualität umfasst, wobei diese Information über die Datenqualität beispielgemäß als Varianz ausgeprägt ist.

Der Fusionsdatensatz 6 umfasst als Wert der wenigstens einen physikalischen Größe einen relativen Wert, beispielhaft einen Korrekturwert, auch Offsetwert genannt. Beispielgemäß ergibt sich der Korrekturwert jeweils aus den kumulierten Fehlerwerten bzw. Änderungswerten, die vom Fusionsfilter 5 bereitgestellt werden.

Die relativen Werte der jeweiligen physikalischen Größen des Fusionsdatensatzes 6 sind also beispielgemäß Korrekturwerte und Varianzen. Der Fusionsdatensatz 6 berechnet beispielgemäß, anders formuliert, einen Fehlerhaushalt, welcher als Eingangsgröße bzw. Eingangsdatensatz der Strapdown-Algorithmus-Einheit bereitgestellt wird und von dieser bei ihren Berechnungen zumindest teilweise berücksichtigt wird. Dieser Fehlerhaushalt umfasst als Datensatz bzw. Ausgangsdaten zumindest Korrekturwerte bzw. Fehlerwerte physikalischer Größen sowie jeweils eine Varianz, als Information über die Datenqualität, zu jedem Wert. Hierbei werden vom Fusionsfilter zumindest die Korrekturwerte und Varianzen zu den physikalischen Größen Geschwindigkeit, Beschleunigung und Drehrate, jeweils bezogen auf das Fahrzeugkoordinatensystem, also jeweils die drei Komponenten dieser Größen bezüglich dieses Koordinatensystems, sowie IMU-Ausrichtung bzw. der IMU-Ausrichtungswinkel zwischen Fahrzeugkoordinatensystem und dem Koordinatensystem bzw. der Einbauausrichtung der Inertialsensoranordnung 1 sowie die Position bezogen auf das Weltkoordinatensystem an die Strapdown-Algorithmus-Einheit übertragen.

Die Werte der physikalischen Größen des Fusionsdatensatzes werden auf direkter bzw. indirekter Basis der Sensorsignale der Sensorelemente 3 und des Satellitennavigationssystems 4 berechnet, wobei wenigstens einige Größen, beispielsweise die Geschwindigkeit und die Position des Fahrzeugs bezüglich der Fahrzeugkoordinaten redundant zu den Daten der Strapdown-Algorithmus-Einheit 2 erfasst werden und verwertet werden.

Das Fusionsfilter 5 ist als beispielgemäß als Error State Space Extended Sequential Kalman Filter ausgebildet ist, also als Kalman Filter, das insbesondere eine Linearisierung umfasst und in welchem die Korrekturwerte berechnet und/oder geschätzt werden und welches sequentiell arbeitet und dabei die in dem jeweiligen Funktionsschritt der Sequenz verfügbaren Eingangsdaten verwendet/berücksichtigt.

Das Fusionsfilter 5 ist so ausgebildet, dass im Zuge eines Funktionsschritts des Fusionsfilters stets, asynchron, die neuesten, dem Fusionsfilter verfügbaren Informationen und/oder Signale und/oder Daten
der Sensorelemente 3, also der Raddrehzahlsensorelemente und des Lenkwinkelsensorelements indirekt mittels einer Fahrzeugmodelleinheit 7 und
des Satellitennavigationssystems 4 direkt oder indirekt, sequenziell aktualisiert und/oder in das Fusionsfilter aufgenommen werden und bei der Berechnung des zugeordneten Funktionsschritts des Fusionsfilters 5 berücksichtigt werden.

Die Fahrzeugmodelleinheit 7 ist so ausgebildet, dass sie aus den Sensorsignalen der Raddrehzahlsensorelemente 3 und des Lenkwinkelsensorelements 3 zumindest
die Geschwindigkeit entlang einer ersten definierten Achse, die Geschwindigkeit entlang einer zweiten definierten Achse sowie die Drehrate um eine dritte definierte Achse berechnet und dem Fusionsfilter 5 bereitstellt.

Das Sensorsystem weist beispielgemäß vier Raddrehzahlsensorelemente 3 auf, wobei jeweils eins der Raddrehzahlsensorelemente jedem Rad des Fahrzeugs zugeordnet ist, wobei
die Fahrzeugmodelleinheit 7 so ausgebildet ist, dass sie aus den Sensorsignalen der Raddrehzahlsensorelemente und dem Lenkwinkel, bereitgestellt durch die Lenkwinkelsensoreinheit, und/oder dem Lenkwinkel jeden Rades, insbesondere erfasst durch das Lenkwinkelsensorelement für die Vorderräder und mittels wenigstens eines weiteren Lenkwinkelsensorelements für die Hinterräder oder zumindest aus einer Modellannahme für die Hinterräder,
die Geschwindigkeitskompenenten und/oder die Geschwindigkeit, jedes Rades, entlang/bezüglich der ersten und der zweiten definierten Achse direkt oder indirekt berechnet, wobei aus diesen acht Geschwindigkeitskomponenten und/oder den vier Geschwindigkeiten jeweils bezüglich der ersten und zweiten definierten Achse,
die Geschwindigkeit entlang einer ersten definierten Achse, die Geschwindigkeit entlang einer zweiten definierten Achse sowie die Drehrate um eine dritte definierte Achse berechnet wird.

Das Sensorsystem bzw. dessen Signalverarbeitungseinrichtung umfasst außerdem eine Reifenparameterschätzungseinheit 10, welche so ausgebildet ist, dass sie zumindest den Halbmesser, beispielgemäß den dynamischen Halbmesser, jeden Rades berechnet und zusätzlich die Schräglaufsteifigkeit und die Schlupfsteifigkeit jeden Rades berechnet und der Fahrzeugmodelleinheit 7 als zusätzliche Eingangsgrößen bereitstellt, wobei die Reifenparameterschätzungseinheit 10 so ausgebildet ist, dass sie ein im Wesentlichen lineares Reifenmodell zur Berechnung der Rad-/Reifengrößen verwendet. Die beispielgemäßen Eingangsgrößen der Reifenparameterschätzungseinheit sind dabei die Raddrehzahlen 3 und der Lenkwinkel 3, zumindest teilweise oder vollständig die Ausgangsgrößen bzw. -werte der Strapdown-Algorithmus-Einheit 2, insbesondere die von ihr bereitgestellten Varianzen zusätzlich zu den Werten der physikalischen Größen, sowie die Varianzen des Fusionsfilters 5, zu den physikalischen Größen, welche die Eingangsgrößen der Reifenparameterschätzungseinheit 10 sind.

Das Sensorsystem bzw. dessen Signalverarbeitungseinrichtung umfasst außerdem eine GPS-Fehlererkennungs-und-Plausibilisierungseinheit 11, welche so ausgebildet ist, dass sie beispielgemäß als Eingangsdaten die Ausgangsdaten bzw. Ausgangssignale des Satellitennavigationssystem 4 sowie zumindest teilweise die Ausgangsdaten bzw. Ausgangssignale der Strapdown-Algorithmus-Einheit 2 erhält und in ihren Berechnungen berücksichtigt

Dabei ist die GPS-Fehlererkennungs-und-Plausibilisierungseinheit 11 zusätzlich mit dem Fusionsfilter 5 verbunden und tauscht mit diesem Daten aus.

Die GPS-Fehlererkennungs-und-Plausibilisierungseinheit 11 ist beispielhaft so ausgebildet, dass sie folgendes Verfahren durchführt:
Verfahren zum Auswählen eines Satelliten, umfassend:
   - Messen von Messlagedaten des Fahrzeuges gegenüber dem Satelliten basierend auf dem GNSS-Signal, also dem Globalen Navigationssatellitensystem-Signal, dem Ausgangssignal bzw. den Ausgangsdaten des Satellitennavigationssystems 4,
   - Bestimmen von zu den basierend auf dem GNSS-Signal bestimmten Messlagedaten redundanten Referenzlagedaten des Fahrzeuges; und
   - Auswählen des Satelliten, wenn eine Gegenüberstellung der Messlagedaten und der Referenzlagedaten einer vorbestimmten Bedingung genügt,
   - wobei zur Gegenüberstellung der Messlagedaten und der Referenzlagedaten eine Differenz zwischen den Messlagedaten und den Referenzlagedaten gebildet wird,
   - wobei die vorbestimmte Bedingung ein maximal zulässiger Fehler zwischen den Messlagedaten und den Referenzlagedaten ist,
   - wobei der maximal zulässige Fehler von einer Standardabweichung abhängig ist, die basierend auf einer Summe aus einer Referenzvarianz für die Referenzlagedaten und einer Messvarianz für die Messlagedaten berechnet wird,
   - wobei der maximal zulässige Fehler einem Vielfachen der Standardabweichung derart entspricht, dass eine Wahrscheinlichkeit, dass die Messlagedaten in ein von der Standardabweichung abhängiges Streuintervall einen vorbestimmten Schwellwert unterschreiten.

Das Sensorsystem bzw. dessen Signalverarbeitungseinrichtung weist außerdem eine Stillstandserkennungseinheit 8 auf, welche so ausgebildet ist, dass sie einen Stillstand des Fahrzeugs erkennen kann und im Fall eines erkannten Stillstands des Fahrzeugs zumindest dem Fusionsfilter 5 Informationen aus einem Stillstandsmodell bereitstellt, dabei insbesondere die Informationen, dass die Drehraten um alle drei Achsen den Wert Null aufweisen und wenigstens eine Positionsänderungsgröße ebenfalls den Wert Null aufweist sowie insbesondere die Geschwindigkeiten entlang aller drei Achsen den Wert Null aufweisen. Die Stillstandserkennungseinheit 8 ist dabei beispielgemäß so ausgebildet, dass sie als Eingangsdaten die Raddrehzahlen bzw. Raddrehzahlsignale nutzt sowie die "rohen" bzw. direkten Ausgangssignale der Inertialsensoranordnung 1.

Die Signalverarbeitungseinrichtung berechnet und/oder verwendet beispielgemäß eine erste Gruppe von Daten physikalischer Größen, deren Werte sich auf ein Fahrzeugkoordinatensystem beziehen und zusätzlich eine zweite Gruppe von Daten physikalischer Größen berechnet und/oder verwendet, deren Werte sich auf ein Weltkoordinatensystem beziehen, wobei dieses Weltkoordinatensystem insbesondere zumindest zur Beschreibung der Ausrichtung und/oder von dynamischen Größen des Fahrzeugs auf der Welt geeignet ist, wobei das Sensorsystem eine Ausrichtungsmodelleinheit 9 aufweist, mit welcher der Ausrichtungswinkel zwischen dem Fahrzeugkoordinatensystem und dem Weltkoordinatensystem berechnet wird.

Der Ausrichtungswinkel zwischen dem Fahrzeugkoordinatensystem und dem Weltkoordinatensystem in der Ausrichtungsmodelleinheit 9 wird berechnet zumindest auf Basis folgender Größen:
die Geschwindigkeit bezüglich des Fahrzeugkoordinatensystems, die Geschwindigkeit bezüglich des Weltkoordinatensystems und den Lenkwinkel.

Der Ausrichtungswinkel zwischen dem Fahrzeugkoordinatensystem und dem Weltkoordinatensystem wird beispielgemäß in der Ausrichtungsmodelleinheit 9 zusätzlich zumindest auf Basis einer oder mehrerer der folgenden Größen berechnet:
eine Ausrichtungsinformation des Fahrzeugs bezogen auf das Weltkoordinatensystem,
einige oder sämtliche der Korrekturwerte und/oder Varianzen des Fusionsfilters und/oder
die Beschleunigung des Fahrzeugs bezogen auf das Fahrzeugkoordinatensystem und/oder das Weltkoordinatensystem.

Die Ausrichtungsmodelleinheit 9 verwendet einige oder sämtliche der Ausgangsdaten und/oder Ausgangssignale der Strapdown-Algorithmus-Einheit 2 zur Berechnung.

Die Ausrichtungsmodelleinheit 9 ist beispielgemäß so ausgebildet, dass sie zusätzlich zu dem Ausrichtungswinkel noch eine Information über die Datenqualität dieser Größe berechnet und bereitstellt, insbesondere die Varianz des Ausrichtungswinkels, wobei die Ausrichtungsmodelleinheit 9 den Ausrichtungswinkel zwischen dem Fahrzeugkoordinatensystem und dem Weltkoordinatensystem sowie die Information über die Datenqualität dieser Größe dem Fusionsfilter 5 bereitstellt und der Fusionsfilter diesen Ausrichtungswinkel bei seinen Berechnungen verwendet und besonders bevorzugt die die Information über die Datenqualität dieser Größe, insbesondere die Varianz des Ausrichtungswinkels, an die Strapdown-Algorithmus-Einheit 2 weiterleitet.

## Patentansprüche

1. Sensorsystem zur Anordnung in einem Fahrzeug, umfassend mehrere Sensorelemente (1, 3, 4), die so ausgebildet sind, dass sie zumindest teilweise unterschiedliche primäre Messgrößen erfassen und zumindest teilweise unterschiedliche Messprinzipien nutzen,
wobei das Sensorsystem zusätzlich ein Satellitennavigationssystem (4) aufweist und
das Sensorsystem des Weiteren eine Signalverarbeitungseinrichtung umfasst, wobei
die Signalverarbeitungseinrichtung so ausgebildet ist, dass sie die Sensorsignale der Sensorelemente sowie die Ausgangssignale des Satellitennavigationssystems zumindest teilweise direkt oder indirekt gemeinsam auswertet, wobei die Signalverarbeitungseinrichtung ein Sensorfusionsmodul umfasst, das ein Fusionsfilter aufweist, welches im Zuge der gemeinsamen Auswertung zumindest der Sensorsignale und/oder daraus abgeleiteter Signale der Sensorelemente einen definierten Fusionsdatensatz bereitstellt, wobei dieser Fusionsdatensatz jeweils Daten zu definierten physikalischen Größen aufweist, wobei der Fusionsdatensatz zu wenigstens einer physikalischen Größe einen Wert dieser physikalischen Größe und eine Information über deren Datenqualität umfasst, wobei die Signalverarbeitungseinrichtung eine erste Gruppe von Daten physikalischer Größen berechnet und/oder verwendet, deren Werte sich auf ein Fahrzeugkoordinatensystem beziehen und wobei die Signalverarbeitungseinrichtung zusätzlich eine zweite Gruppe von Daten physikalischer Größen berechnet und/oder verwendet, deren Werte sich auf ein Weltkoordinatensystem beziehen, wobei dieses Weltkoordinatensystem insbesondere zumindest zur Beschreibung der Ausrichtung und/oder von dynamischen Größen des Fahrzeugs auf der Welt geeignet ist, wobei das Sensorsystem eine Ausrichtungsmodelleinheit (9) aufweist, mit welcher der Ausrichtungswinkel zwischen dem Fahrzeugkoordinatensystem und dem Weltkoordinatensystem berechnet wird, und wobei die Ausrichtungsmodelleinheit so ausgebildet ist, dass sie zusätzlich zu dem Ausrichtungswinkel noch eine Information über die Datenqualität dieser Größe berechnet und bereitstellt, insbesondere die Varianz des Ausrichtungswinkels,
**dadurch gekennzeichnet, dass**
das Fusionsfilter so ausgebildet ist, dass der Fusionsdatensatz als Wert der wenigstens einen physikalischen Größe einen relativen Wert umfasst, insbesondere einen Offsetwert und/oder Änderungswert und/oder Korrekturwert und/oder Fehlerwert,
wobei der Ausrichtungswinkel zwischen dem Fahrzeugkoordinatensystem und dem Weltkoordinatensystem in der Ausrichtungsmodelleinheit berechnet wird zumindest auf Basis folgender Größen:
die Geschwindigkeit des Fahrzeugs bezüglich des Fahrzeugkoordinatensystems,
die Geschwindigkeit des Fahrzeugs bezüglich des Weltkoordinatensystems,
wobei die Ausrichtungsmodelleinheit den Ausrichtungswinkel zwischen dem Fahrzeugkoordinatensystem und dem Weltkoordinatensystem sowie die Information über die Datenqualität dieser Größe dem Fusionsfilter bereitstellt und der Fusionsfilter diesen Ausrichtungswinkel bei seinen Berechnungen verwendet.

2. Sensorsystem nach Anspruch 1, **dadurch gekennzeichnet, dass** der Ausrichtungswinkel zwischen dem Fahrzeugkoordinatensystem und dem Weltkoordinatensystem in der Ausrichtungsmodelleinheit zusätzlich auf Basis des Lenkwinkels berechnet wird.

3. Sensorsystem nach Anspruch 2, **dadurch gekennzeichnet, dass** die relativen Werte der jeweiligen physikalischen Größen des Fusionsdatensatzes Korrekturwerte sind und die Information über die Datenqualität der Wertephysikalischen Größen Varianzen sind.

4. Sensorsystem nach mindestens einem der Ansprüche 1 bis 3, **dadurch gekennzeichnet, dass** das Sensorsystem eine Inertialsensoranordnung aufweist, umfassend wenigstens ein Beschleunigungssensorelement und zumindest ein Drehratensensorelement, und dass das Sensorfusionsmodul eine Strapdown-Algorithmus-Einheit umfasst, in welcher ein Strapdown-Algorithmus durchgeführt wird, mit dem wenigstens die Sensorsignale der Inertialsensoranordnung zu, insbesondere korrigierten, Navigationsdaten und/oder Fahrdynamikdaten verarbeitet werden, bezogen auf das Fahrzeug, in welchem das Sensorsystem angeordnet ist.

5. Sensorsystem nach mindestens einem der Ansprüche 2 bis 4, **dadurch gekennzeichnet, dass** der Ausrichtungswinkel zwischen dem Fahrzeugkoordinatensystem und dem Weltkoordinatensystem in der Ausrichtungsmodelleinheit berechnet wird zusätzlich zumindest auf Basis einer oder mehrerer der folgenden Größen:
eine Ausrichtungsinformation des Fahrzeugs bezogen auf das Weltkoordinatensystem,
einige oder sämtliche der Korrekturwerte und/oder Varianzen des Fusionsfilters und/oder
die Beschleunigung des Fahrzeugs bezogen auf das Fahrzeugkoordinatensystem und/oder das Weltkoordinatensystem.

6. Sensorsystem nach Anspruch 4 oder 5, **dadurch gekennzeichnet, dass** die Ausrichtungsmodelleinheit einige oder sämtliche der Ausgangsdaten und/oder Ausgangssignale der Strapdown-Algorithmus-Einheit zur Berechnung verwendet.

7. Sensorsystem nach mindestens einem der Ansprüche 1 bis 6, **dadurch gekennzeichnet, dass** die Ausrichtungsmodelleinheit so ausgebildet ist, dass sie zusätzlich zu dem Ausrichtungswinkel noch eine Information über die Datenqualität dieser Größe berechnet und bereitstellt, insbesondere die Varianz des Ausrichtungswinkels,
wobei der Ausrichtungswinkel der Strapdown-Algorithmus-Einheit bereitgestellt wird und/oder in dieser mit dem Ausgangswert der Ausrichtungsmodelleinheit überschrieben wird und dass die Information über die Datenqualität dieser Größe dem Fusionsfilter bereitgestellt wird und/oder in diesem mit dem Ausgangswert der Ausrichtungsmodelleinheit überschrieben wird.

8. Sensorsystem nach mindestens einem der Ansprüche 1 bis 7, **dadurch gekennzeichnet, dass** das Sensorsystem ein Satellitennavigationssystem umfasst, welches so ausgebildet ist, dass es die Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe erfasst und dem Fusionsfilter bereitstellt und der Fusionsfilter diese Größen bei seinen Berechnungen verwendet.

9. Sensorsystem nach mindestens einem der Ansprüche 1 bis 8, **dadurch gekennzeichnet, dass** die Ausrichtungsmodelleinheit so ausgebildet ist, dass sie bei ihren Berechnungen wenigstens eine oder mehrere oder sämtliche der folgenden Modellannahmen berücksichtigt:
die Gesamtgeschwindigkeit des Fahrzeugs bezüglich zumindest seiner Längs- und/oder Querachse ist größer als Null,
die durchschnittliche Geschwindigkeit des Fahrzeugs in Richtung/ entlang seiner Hochachse ist gleich Null,
es tritt kein Schräglauf der Reifen auf und/oder
das Fahrzeug folgt im Wesentlichen ohne Abweichungen seinen Radlenkwinkeln.

10. Sensorsystem nach mindestens einem der Ansprüche 2 bis 9, **dadurch gekennzeichnet, dass** der Ausrichtungswinkel zwischen dem Fahrzeugkoordinatensystem und dem Weltkoordinatensystem in der Ausrichtungsmodelleinheit berechnet wird zusätzlich zumindest auf Basis einer oder mehrerer der folgenden Größen:
die Raddrehzahlen von Raddrehzahlsensorelementen des Fahrzeugs sowie den Lenkwinkel oder die berechnetet Radwinkel, wobei mit den Raddrehzahlen und dem Lenkwinkel oder den Radwinkeln über Differenzbildung die Drehrate des Fahrzeugs um dessen Hochachse bestimmt wird und/oder die Drehrate des Fahrzeugs um dessen Hochachse bezogen auf das Fahrzeugkoordinatensystem, bereitgestellt von der Strapdown-Algorithmus-Einheit.

## Claims

1. A sensor system for placement in a vehicle, comprising a plurality of sensor elements (1, 3, 4), which are configured so that they, at least to some extent, capture different primary measured variables and, at least to some extent, use different measuring principles,
wherein the sensor system additionally includes a satellite navigation system (4) and
the sensor system further comprises a signal processing device, wherein
the signal processing device is configured to, at least to some extent, directly or indirectly evaluate the sensor signals of the sensor elements and the output signals of the satellite navigation system jointly, wherein the signal processing device comprises a sensor fusion module, including a fusion filter, which, in the course of the joint evaluation of at least the sensor signals and/or signals of the sensor elements derived from these, provides a defined fusion data set, wherein this fusion data set in each case includes data on defined physical variables, wherein the fusion data set for at least one physical variable includes a value of this physical variable and information on its data quality, wherein the signal processing device calculates and/or uses a first group of data of physical variables, the values of which relate to a vehicle coordinate system, and wherein the signal processing device additionally calculates and/or uses a second group of data of physical variables, the values of which relate to a world coordinate system, wherein this world coordinate system is, in particular, suitable for at least describing the alignment and/or dynamic variables of the vehicle in the world, wherein the sensor system includes an alignment model unit (9), with which the alignment angle between the vehicle coordinate system and the world coordinate system is calculated, and wherein the alignment model unit is configured so that, in addition to the alignment angle, it also calculates and provides information on the data quality of this variable, in particular the variance of the alignment angle,
**characterised in that**
the fusion filter is configured so that the fusion data set comprises a relative value as the value of the at least one physical variable, in particular an offset value and/or change value and/or correction value and/or error value,
wherein the alignment angle between the vehicle coordinate system and the world coordinate system is calculated in the alignment model unit, at least based on the following variables:
the speed of the vehicle relative to the vehicle coordinate system,
the speed of the vehicle relative to the world coordinate system,
wherein the alignment model unit provides the alignment angle between the vehicle coordinate system and the world coordinate system as well as the information on the data quality of this variable to the fusion filter and the fusion filter uses this alignment angle in its calculations.

2. The sensor system according to claim 1, **characterised in that** the alignment angle between the vehicle coordinate system and the world coordinate system is additionally calculated in the alignment model unit based on the steering angle.

3. The sensor system according to claim 2, **characterised in that** the relative values of the respective physical variables of the fusion data set are correction values and the information on the data quality of the values of physical variables are variances.

4. The sensor system according to at least one of claims 1 to 3, **characterised in that** the sensor system includes an inertial sensor arrangement, comprising at least one acceleration sensor element and at least one rotation rate sensor element, and **in that** the sensor fusion module comprises a strapdown algorithm unit, in which a strapdown algorithm is executed, with which at least the sensor signals of the inertial sensor arrangement can be processed into, in particular corrected, navigation data and/or driving dynamics data, related to the vehicle in which the sensor system is arranged.

5. The sensor system according to at least one of claims 2 to 4, **characterised in that** the alignment angle between the vehicle coordinate system and the world coordinate system is calculated in the alignment model unit, additionally at least based on one or more of the following variables:
alignment information of the vehicle relative to the world coordinate system,
some or all of the correction values and/or variances of the fusion filter, and/or
the acceleration of the vehicle relative to the vehicle coordinate system and/or the world coordinate system.

6. The sensor system according to claim 4 or 5, **characterised in that** the alignment model unit uses some or all of the output data and/or output signals of the strapdown algorithm unit for the calculation.

7. The sensor system according to at least one of claims 1 to 6, **characterised in that** the alignment model unit is configured so that, in addition to the alignment angle, it also calculates and provides information on the data quality of this variable, in particular the variance of the alignment angle,
wherein the alignment angle is provided to the strap down algorithm unit and/or overwritten therein with the output value of the alignment model unit, and **in that** the information on the data quality of this variable is provided to the fusion filter and/or overwritten therein with the output value of the alignment model unit.

8. The sensor system according to at least one of claims 1 to 7, **characterised in that** the sensor system comprises a satellite navigation system, which is configured so that it detects the distance data, in each case between the assigned satellite and the vehicle or a variable dependent thereon, and speed information data, in each case between the assigned satellite and the vehicle or a dependent variable, and provides these to the fusion filter and the fusion filter uses these variables in its calculations.

9. The sensor system according to at least one of claims 1 to 8, **characterised in that** the alignment model unit is configured so that, in its calculations, it takes account of at least one or more or all of the following model assumptions:
the overall speed of the vehicle relative at least to its longitudinal and/or transverse axis is greater than zero,
the average speed of the vehicle in the direction/along its vertical axis is equal to zero,
no drift of the tyres occurs, and/or
the vehicle substantially follows its wheel steering angles without deviations.

10. The sensor system according to at least one of claims 2 to 9, **characterised in that** the alignment angle between the vehicle coordinate system and the world coordinate system is calculated in the alignment model unit, additionally at least based on one or more of the following variables:
the wheel speeds of wheel speed sensor elements of the vehicle and the steering angle or the calculated wheel angle, wherein the wheel speeds and the steering angle or the wheel angles are used to determine, by establishing the difference, the rate of rotation of the vehicle about its vertical axis and/or the rate of rotation of the vehicle about its vertical axis relative to the vehicle coordinate system, provided by the strapdown algorithm unit.

## Revendications

1. Système capteur destiné à être disposé dans un véhicule, comprenant plusieurs éléments capteurs (1, 3, 4), qui sont conçus de manière à détecter des grandeurs primaires à mesurer au moins en partie différentes et utiliser des principes de mesure au moins en partie différents,
le système capteur comportant en outre un système de navigation par satellite (4) et
le système capteur comprenant par ailleurs un dispositif de traitement de signal,
le dispositif de traitement de signal étant conçu de manière à exploiter au moins en partie directement ou indirectement en commun les signaux de capteur des éléments capteurs ainsi que les signaux de sortie du système de navigation par satellite, le dispositif de traitement de signal comprenant un module de fusion multicapteur, qui comporte un filtre de fusion, qui fournit au cours de l'exploitation commune au moins des signaux de capteur et/ou de signaux des éléments capteurs dérivés de ceux-ci un ensemble de données de fusion défini, cet ensemble de données de fusion comportant respectivement des données concernant des grandeurs physiques définies, l'ensemble de données de fusion comprenant pour au moins une grandeur physique une valeur de cette grandeur physique et une information sur la qualité de ses données, le dispositif de traitement de signal calculant et/ou utilisant un premier groupe de données de grandeurs physiques, dont les valeurs se rapportent à un système de coordonnées de véhicule et le dispositif de traitement de signal calculant et/ou utilisant en plus un second groupe de données de grandeurs physiques, dont les valeurs se rapportent à un système de coordonnées universelles, ce système de coordonnées universelles étant adapté en particulier au moins pour la description de l'orientation et/ou de grandeurs dynamiques du véhicule dans le monde, le système capteur comportant une unité de modèle d'orientation (9), au moyen de laquelle l'angle d'orientation entre le système de coordonnées de véhicule et le système de coordonnées universelles est calculé, et l'unité de modèle d'orientation étant conçue de manière à calculer et fournir en plus de l'angle d'orientation encore une information sur la qualité des données de cette grandeur, en particulier la variance de l'angle d'orientation,
**caractérisé en ce que**
le filtre de fusion est conçu de telle manière que l'ensemble de données de fusion comprend une valeur relative en guise de valeur de l'au moins une grandeur physique, en particulier une valeur de décalage et/ou une valeur de modification et/ou une valeur de correction et/ou une valeur d'erreur,
l'angle d'orientation entre le système de coordonnées de véhicule et le système de coordonnées universelles étant calculé dans l'unité de modèle d'orientation au moins sur la base des grandeurs suivantes :
la vitesse du véhicule par rapport au système de coordonnées de véhicule,
la vitesse du véhicule par rapport au système de coordonnées universelles,
l'unité de modèle d'orientation fournissant au filtre de fusion l'angle d'orientation entre le système de coordonnées de véhicule et le système de coordonnées universelles ainsi que l'information concernant la qualité des données de cette grandeur et le filtre de fusion utilisant cet angle d'orientation dans ses calculs.

2. Système capteur selon la revendication 1, **caractérisé en ce que** l'angle d'orientation entre le système de coordonnées de véhicule et le système de coordonnées universelles est calculé dans l'unité de modèle d'orientation en outre sur la base de l'angle de braquage.

3. Système capteur selon la revendication 2, **caractérisé en ce que** les valeurs relatives des grandeurs physiques respectives de l'ensemble de données de fusion sont des valeurs de correction et l'information sur la qualité des données des valeurs des grandeurs physiques consiste en des variances.

4. Système capteur selon au moins une des revendications 1 à 3, **caractérisé en ce que** le système capteur comporte un ensemble capteur inertiel, comprenant au moins un élément capteur d'accélération et au moins un élément capteur de vitesse de rotation, et **en ce que** le module de fusion multicapteur comprend une unité d'algorithme « strapdown », dans laquelle un algorithme « strapdown » est exécuté, au moyen duquel au moins les signaux de capteur de l'ensemble capteur inertiel sont traités pour obtenir des données de navigation et/ou des données de dynamique de véhicule, en particulier corrigées, concernant le véhicule dans lequel le système capteur est disposé.

5. Système capteur selon au moins une des revendications 2 à 4, **caractérisé en ce que** l'angle d'orientation entre le système de coordonnées de véhicule et le système de coordonnées universelles est calculé dans l'unité de modèle d'orientation en outre au moins sur la base d'une ou de plusieurs des grandeurs suivantes :
une information d'orientation du véhicule par rapport au système de coordonnées universelles, certaines ou toutes les valeurs de correction et/ou variances du filtre de fusion et/ou l'accélération du véhicule par rapport au système de coordonnées de véhicule et/ou au système de coordonnées universelles.

6. Système capteur selon la revendication 4 ou 5, **caractérisé en ce que** l'unité de modèle d'orientation utilise certaines ou toutes les données de sortie et/ou certains ou tous les signaux de sortie de l'unité d'algorithme « strapdown » pour le calcul.

7. Système capteur selon au moins une des revendications 1 à 6, **caractérisé en ce que** l'unité de modèle d'orientation est conçue de manière à calculer et fournir en plus de l'angle d'orientation encore une information sur la qualité des données de cette grandeur, en particulier la variance de l'angle d'orientation,
l'angle d'orientation étant fourni à l'unité d'algorithme « strapdown » et/ou étant écrasé dans celle-ci par la valeur de sortie de l'unité de modèle d'orientation et **en ce que** l'information sur la qualité des données de cette grandeur est fournie au filtre de fusion et/ou est écrasée dans celui-ci par la valeur de sortie de l'unité de modèle d'orientation.

8. Système capteur selon au moins une des revendications 1 à 7, **caractérisé en ce que** le système capteur comprend un système de navigation par satellite, qui est conçu de manière à détecter les données de distance respectivement entre le satellite associé et le véhicule ou une grandeur dépendante de celles-ci ainsi que des données d'information de vitesse respectivement entre le satellite associé et le véhicule ou une grandeur dépendante de celles-ci et les fournir au filtre de fusion et le filtre de fusion utilise ces grandeurs dans ses calculs.

9. Système capteur selon au moins une des revendications 1 à 8, **caractérisé en ce que** l'unité de modèle d'orientation est conçue de manière à prendre en compte dans ses calculs au moins une ou plusieurs des ou toutes les hypothèses de modèle suivantes :
la vitesse totale du véhicule par rapport à au moins son axe longitudinal et/ou transversal est supérieure à zéro,
la vitesse moyenne du véhicule dans la direction / le long de son axe vertical est égale à zéro,
il n'y a pas de dérive des pneus et/ou
le véhicule suit son angle de braquage de roue essentiellement sans écart.

10. Système capteur selon au moins une des revendications 2 à 9, **caractérisé en ce que** l'angle d'orientation entre le système de coordonnées de véhicule et le système de coordonnées universelles est calculé dans l'unité de modèle d'orientation en outre au moins sur la base d'une ou de plusieurs des grandeurs suivantes :
les vitesses de rotation de roue d'éléments capteurs de vitesse de roue du véhicule ainsi que l'angle de braquage ou les angles de roue calculés, la vitesse de rotation du véhicule sur son axe vertical étant déterminée par soustraction au moyen des vitesses de rotation de roue et de l'angle de braquage ou des angles de roue et/ou la vitesse de rotation du véhicule sur son axe vertical par rapport au système de coordonnées de véhicule, fournie par l'unité d'algorithme « strapdown ».
